# EUROPÄISCHE PATENTSCHRIFT

(11) **EP 1 963 689 B1**
(45) Veröffentlichungstag und Bekanntmachung des Hinweises auf die Patenterteilung: **03.02.2010**
(21) Anmeldenummer: 06818581.8
(22) Anmeldetag: 16.11.2006
(51) Int. Cl.: F16B 37/04

(54) **BLECHMUTTER**
SHEET METAL NUT
ECROU EN PLAQUE DE METAL

(30) Priorität: 16.12.2005 DE 102005060137
(43) Veröffentlichungstag der Anmeldung: 03.09.2008
(73) Patentinhaber: A. RAYMOND ET CIE, 38000 Grenoble (FR)
(72) Erfinder: MOTSCH, Uwe, 79618 Rheinfelden (DE); HULLMANN, Klaus, 79540 Lörrach (DE)
(74) Vertreter: Rüttgers, Joachim
(86) Internationale Anmeldenummer: PCT/EP2006/010993
(87) Internationale Veröffentlichungsnummer: WO 2007/073804

(56) Entgegenhaltungen:
- US-A1- 2005 271 492

## Beschreibung

Die Erfindung betrifft eine Blechmutter gemäß dem Oberbegriff des Patentanspruches 1.

Eine derartige Blechmutter ist aus US 2005/0271492 A1 bekannt. Die vorbekannte, zum Einbau in eine Öffnung eines Trägerteiles vorgesehene Blechmutter besteht aus einem Käfigteil, das in die Öffnung einfügbar und mit einem Verbindungsteil zum Verbinden eines Anbauteiles mit dem Trägerteil in Eingriff bringbar ist. Das Käfigteil weist eine Basisplatte, Auflagerandabschnitte, die an Randbereichen der Öffnung zur Anlage kommen, und einander gegenüberliegende Seitenplatten auf und ist mit den Auflagerandabschnitten gegenüberliegend angeordneten Anlageendabschnitten ausgebildet, die in eingebauter Anordnung der Blechmutter die Randbereiche der Öffnung hintergreifen. Die Auflagerandabschnitte sind an der Basisplatte angeformt. Weiterhin sind zwei einander gegenüberliegende Schenkelplatten vorhanden, die bei der vorbekannten Blechmutter an dem Käfigteil ausgebildet und zwischen den Seitenplatten angeordnet sind sowie sich von einem Fußbereich mit zunehmendem Abstand voneinander in Richtung der Auflagerandabschnitte erstrecken. Die Anlageendabschnitte sind an jeweils einem den Auflagerandabschnitten zugewandten freien Ende einer Schenkelplatte angeformt sowie mit ihren Stirnseiten einander zugewandt und liegen mit Flachseiten den Auflagerandabschnitten gegenüber.

Eine weitere Blechmutter ist aus DE-A-19 23 321 bekannt. Diese Blechmutter ist einstückig ausgebildet sowie aus einem Blech gestanzt. Sie verfügt über ein Käfigteil, das Auflagerandabschnitte aufweist, die an Randbereichen einer in ein Trägerteil eingebrachten Öffnung, in die die Blechmutter einzubauen ist, zur Anlage kommen. Einander gegenüberliegende Seitenplatten des Käfigteiles sind in die Öffnung des Trägerteiles einfügbar, wobei weiterhin den Auflagerandabschnitten gegenüberliegend angeordnete federnde. Anlageendabschnitt vorhanden sind, die in eingebauter Anordnung die Randbereiche der Öffnung hintergreifen. Zum Verbinden eines Anbauteiles mit dem Trägerteil ist ein Verbindungsteil vorgesehen, das mit der Blechmutter in Eingriff bringbar ist.

Der Erfindung liegt die Aufgabe zugrunde, eine Blechmutter der eingangs genannten Art anzugeben, die sich durch hohe Auszugskräfte auszeichnet.

Diese Aufgabe wird bei einer Blechmutter der eingangs genannten Art erfindungsgemäß mit den kennzeichnenden Merkmalen des Patentanspruches 1 gelöst.

Durch die erfindungsgemäße Ausgestaltung der Blechmutter mit einem Käfigteil und mit einem separaten Sicherungsteil liegen die nunmehr an den an dem separaten Sicherungsteil vorhandenen Schenkelplatten ausgebildeten Anlageendabschnitte mit Flachseiten an den den Auflagerandabschnitten gegenüberliegenden Randbereichen der Öffnung großflächig an, während die Schenkelplatten in dem Fußbereich über den Mittelsteg gegen Aufbiegen gesichert miteinander verbunden sind, so dass besonders hohe, das Trägerteil gegebenenfalls sogar deformierende Auszugskräfte erforderlich sind, bevor die erfindungsgemäße Blechmutter aus der Öffnung herausgezogen wird.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Blechmutter und
- Fig. 2: im Schnitt das Ausführungsbeispiel gemäß Fig. 1 in einer Einbausituation.

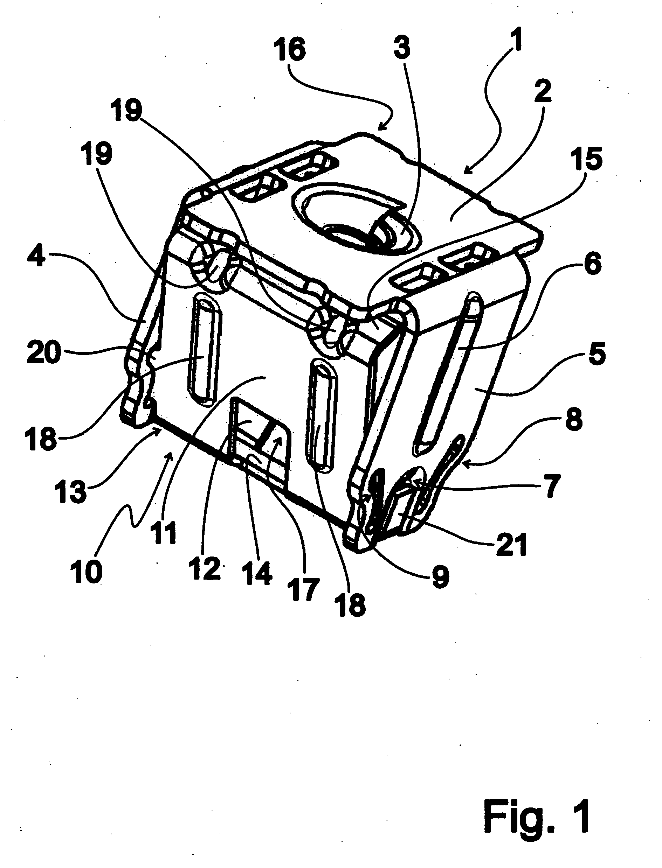

Fig. 1 zeigt in einer perspektivischen Ansicht ein Ausführungsbeispiel einer erfindungsgemäßen Blechmutter. Das Ausführungsbeispiel gemäß Fig. 1 verfügt über ein Käfigteil 1, das mit einer flachen, hier im Wesentlichen quadratischen Basisplatte 2 ausgebildet ist. In etwa in der Mitte der Basisplatte 2 sind Gewindelappen 3 eines Prägegewindes als eine verhältnismäßig kostengünstig herstellbare Ausgestaltung einer Gewindestruktur eingeformt, in das ein in Fig. 1 nicht dargestelltes Verbindungsteil in Gestalt einer Blechschraube einschraubbar ist. Eine nicht dargestellte Ausgestaltung einer Gewindestruktur ist beispielsweise ein Gewindehals mit einem Innengewinde vermittelte Schrauben, der gegebenenfalls mit einer Schraubensicherung ausgeführt ist.

An zwei einander gegenüberliegenden Randseiten der Basisplatte 2 sind zwei im Wesentlichen um 90 Grad in eine Richtung umgebogene Seitenplatten 4, 5 angeformt, die in Längsrichtung eingeformte Versteifungssicken 6 aufweisen. Die Seitenplatten 4, 5 verfügen an ihren der Basisplatte 2 gegenüberliegenden freien Enden über jeweils eine Mittenausnehmung 7 und zwei beidseitig der Mittenausnehmung 7 angeordnete Randausnehmungen 8, 9. Die Mittenausnehmung 7 ist in Richtung der von der Basisplatte 2 wegweisenden Seite geöffnet, während die Randausnehmungen 8, 9 geschlossen sind.

Die erfindungsgemäße Blechmutter verfügt weiterhin über ein separates Sicherungsteil 10, das zwei einander gegenüberliegende Schenkelplatten 11, 12 aufweist. Die Schenkelplatten 11, 12 sind in einem Fußbereich 13 des Sicherungsteiles 10 über einen Mittelsteg 14 miteinander verbunden und erstrecken sich mit zunehmenden Abstand voneinander von dem Fußbereich 13 weg. An den dem Fußbereich 13 abgewandten Enden der Schenkelplatten 11,12 sind federnde Anlageendabschnitte 15,16 angeformt, die mit ihren Stimseiten aufeinander zuweisend ausgerichtet sind.

Die Schenkelplatten 11, 12 weisen im Fußbereich 13 jeweils eine in etwa mittig angeordnete Fußausnehmung 17 und zur Versteifung zwei sich jeweils zwischen der Fußausnehmung 17 und einer Randseite in Längsrichtung erstreckende längliche Versteifungssicke 18 auf. In Verlängerung der länglichen Versteifungssicken 18 sind im Übergangsbereich zwischen den Schenkelplatten 11, 12 und den Anlageendabschnitten 15, 16 kalottenartige Versteifungssicken 19 angeordnet, um die Knickfestigkeit in diesem Bereich zu erhöhen.

Weiterhin lässt sich der Darstellung gemäß Fig. 1 entnehmen, dass das Sicherungsteil 10 zum Einen über im Fußbereich 13 an die Schenkelplatten 11,12 angeformte, nach außen vorstehende Sicherungsstege 20 verfügt, die in die in den Seitenplatten 4, 5 des Käfigteiles 1 eingebrachte Randausnehmungen 8, 9 eingreifen. Weiterhin ist das Sicherungsteil 10 mit Randzungen 21 ausgebildet, die sich von dem Mittelsteg 14 in Richtung der Anlageendabschnitte 15, 16 erstrecken und jeweils in einer in der Seitenplatte 4, 5 des Käfigteiles 1 eingebrachten Mittenausnehmung 7 angeordnet sind. Dadurch ist das Sicherungsteil 10 in dem Käfigteil 1 mit einer gewissen geringen Beweglichkeit gehalten.

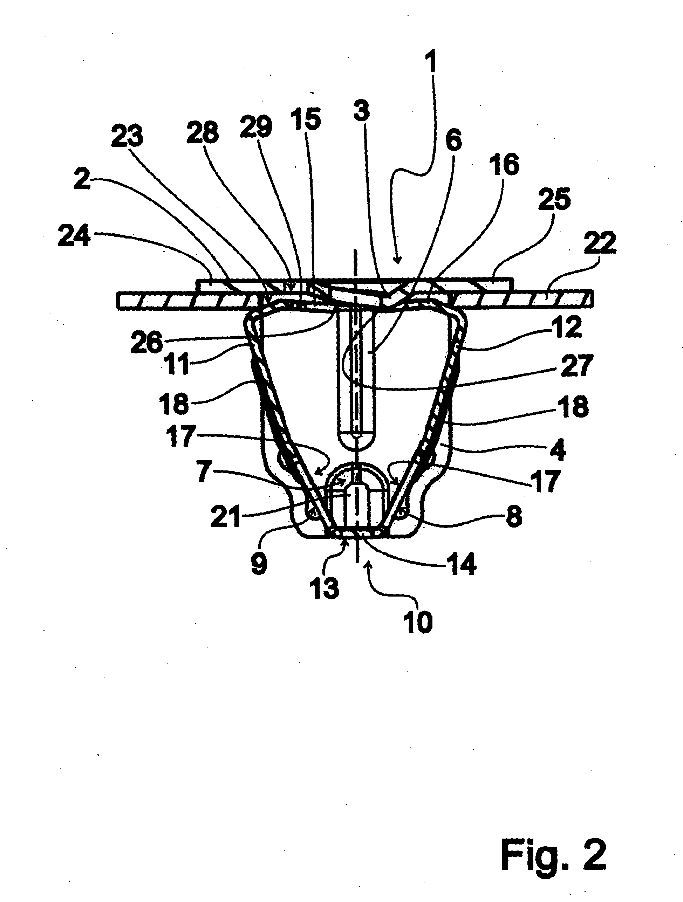

Fig. 2 zeigt im Schnitt das Ausführungsbeispiel gemäß Fig. 1 in einer Ansicht auf die in der Darstellung gemäß Fig. 2 nach hinten gewandte Seitenplatte 4 in einer Einbausituation, in der die erfindungsgemäße Blechmutter in einem in einem Trägerteil 22 eingebrachte Öffnung 23 eingefügt ist. Aus Fig. 2 ist ersichtlich, dass in der Einbausituation das Käfigteil 1 mit an der Basisplatte 2 angeformten seitlichen Auflagerandabschnitten 24, 25, die zwischen den Seitenplatten 4, 5 liegen und sich nach außen erstrecken, auf einer Seite der Öffnung 23 an Randbereichen aufliegen, während die Anlageendabschnitte 15, 16 des Sicherungsteiles 10 mit ihren den Auflagerandabschnitten 24, 25 gegenüberliegend angeordneten Flachseiten an den den Auflagerandabschnitten 24, 25 gegenüberliegenden Randbereichen der Öffnung 23 anliegen.

Dadurch ist ein verhältnismäßig großer Auflagebereich sowohl der Anlageendabschnitte 15, 16 als auch der Auflagerandabschnitte 24, 25 an den Randbereichen der Öffnung 23 erzielt, was zu sehr hohen Auszugskräften führt.

Zweckmäßigerweise sind die Anlageendabschnitte 14, 15 winklig in Bezug auf Auflagerandabschnitte 24, 25 ausgebildet, beispielsweise um Dickentoleranzen des Trägerteiles 22 auszugleichen oder um einen gewissen Andruck zu erzielen. Weiterhin erstrecken sich, wie in Fig. 2 dargestellt, die Anlageendabschnitte 15, 16 so weit aufeinander zu, dass der zwischen ihren Stirnseiten 26, 27 befindliche Zwischenraum in etwa dem Wirkdurchmesser des Prägegewindes entspricht. Dadurch wird sichergestellt, dass nach dem Eingriff des Befestigungselementes mit dem Prägegewinde ein Einfedern der Schenkelplatten 11, 12 blockiert ist und die hohen Auszugskräfte auch bei Verkippen der Blechmutter erhalten bleiben.

Weiterhin lässt sich Fig. 2 entnehmen, dass die Basisplatte 2 mit durchgehenden Demontageausnehmungen 28 ausgebildet ist, während die Anlageendabschnitte 15, 16 Eingriffsausnehmungen 29 aufweisen, die den Demontageausnehmungen 28 gegenüberliegend angeordnet sind. Dadurch sind mit einem in Fig. 2 nicht dargestellten Demontagewerkzeug, das durch die Demontageausnehmungen 28 der Basisplatte 2 durchgreift und mit den Eingriffsausnehmungen 29 der Anlageendabschnitte 15,16 in Eingriff kommt, die Schenkelplatten 11, 12 zusammendrückbar, so dass die Blechmutter von dem Trägerteil 22 trotz der ansonsten hohen Auszugskräfte in einfacher Art und Weise wieder entfernbar ist.

## Patentansprüche

1. Blechmutter zum Einbau in eine Öffnung (23) eines Trägerteiles (22) mit einem Käfigteil (1), das in die Öffnung (23) einfügbar und mit einem Verbindungsteil zum Verbinden eines Anbauteiles mit dem-Trägerteil (22) in Eingriff bringbar ist, wobei das Käfigteil (1) eine Basisplatte (2), Auflagerandabschnitte (24, 25), die an Randbereichen der Öffnung (23) zur Anlage kommen, und einander gegenüberliegende Seitenplatten (4, 5) aufweist, und mit den Auflagerandabschnitten (24, 25) gegenüberliegend angeordneten Anlageendabschnitten (15, 16), die in eingebauter Anordnung der Blechmutter die Randbereiche der Öffnung (23) hintergreifen, wobei die Auflagerandabschnitte (24, 25) an der Basisplatte (2) angeformt und zwei einander gegenüberliegende Schenkelplatten (11, 12) vor handen sind, die zwischen den Seitenplatten (4, 5) angeordnet sind und sich von einem den Anlageendabschnitten (15, 16) abgewandten Fußbereich (13) mit zunehmendem Abstand voneinander in Richtung der Auflagerandabschnitte (24, 25) erstrecken, und wobei die Anlageendabschnitte (15, 16) an jeweils einem den Auflagerandabschnitten (24, 25) zugewandten freien Ende einer Schenkelplatte (11,12) angeformt sowie mit ihren Stirnseiten einander zugewandt sind und mit Flachseiten den Auflagerandabschnitten (24, 25) gegenüberliegen, **dadurch gekennzeichnet, dass** ein separates Sicherungsteil (10) vorhanden ist, das mit den an dem Käfigteil (1) ausgebildeten Seitenplatten (4, 5) verbunden ist und das die Schenkelplatten (11, 12) aufweist, und dass die Schenkelplatten (11, 12) in dem Fußbereich (13) über einen Mittelsteg (14) miteinander verbunden sind.

2. Blechmutter nach Anspruch 1, **dadurch gekennzeichnet, dass** im Übergangsbereich zwischen den Schenkelplatten (11, 12) und den Anlageendabschnitten (15,16) kalottenartige Versteifungssicken (19) eingeformt sind.

3. Blechmutter nach Anspruch 1 oder Anspruch 2, **dadurch gekennzeichnet, dass** in den Seitenplatten (4, 5) und/oder in den Schenkelplatten (11, 12) sich in Längsrichtung erstreckende längliche Versteifungssicken (6,18) eingeformt sind.

4. Blechmutter nach einem der Ansprüche 1 bis 3, **dadurch gekennzeichnet, dass** das Sicherungsteil (10) an den Schenkelplatten (11, 12) angeformte Sicherungsstege (20) aufweist, die in in den Seitenplatten (4, 5) ausgebildeten Ausnehmungen (8, 9) eingreifen.

5. Blechmutter nach einem der Ansprüche 1 bis 4, **dadurch gekennzeichnet, dass** die Anlageendabschnitte (15, 16) winklig in Bezug auf die Auflagerandabschnitte (24, 25) ausgerichtet sind.

6. Blechmutter nach einem der Ansprüche 1 bis 5, **dadurch gekennzeichnet, dass** in die Basisplatte (2) eine Gewindestruktur eingebracht ist.

7. Blechmutter nach Anspruch 6, **dadurch gekennzeichnet, dass** die Stirnseiten (26, 27) der Anlageendabschnitte (15, 16) einen Abstand voneinander aufweisen, der im Wesentlichen dem Wirkdurchmesser der Gewindestruktur entspricht.

8. Blechmutter nach einem der Ansprüche 1 bis 7, **dadurch gekennzeichnet, dass** die Basisplatte (2) und die Anlageendabschnitte (15, 16) einander gegenüberliegende Ausnehmungen (28, 29) aufweisen, die zum Zusammenwirken mit einem Demontagewerkzeug eingerichtet sind.

## Claims

1. Sheet metal nut for installation in an opening (23) of a bearing part (22), comprising a cage part (1) which can be inserted into the opening (23) and can be caused to engage a connecting part for connecting an add-on part to the bearing part (22), the cage part (1) having a base plate (2), support edge sections (24, 25), which come to rest on the edge regions of the opening (23), and side plates (4, 5) opposite one another, and comprising contact end sections (15, 16) which are arranged opposite the support edge sections (24, 25) and grip behind the edge regions of the opening (23) when the sheet metal nut is arranged in the installed position, the support edge sections (24, 25) being formed on the base plate (2) and two leg plates (11, 12) opposite one another being present, which are arranged between the side plates (4, 5) and extend from a base region (13) facing away from the contact end sections (15, 16) with increasing distance from one another in the direction of the support edge sections (24, 25), and the contact end sections (15,16) being formed on in each case a free end of a leg plate (11, 12), which end faces the support edge sections (24, 25), and facing one another with their end faces and their flat sides being opposite the support edge sections (24, 25), **characterized in that** a separate securing part is present which is connected to the side plates (4, 5) formed on the cage part (1) and which has the leg plates (11, 12), and **in that** the leg plates (11, 12) are connected to one another in the base region via a middle bar (14).

2. Sheet metal nut according to Claim 1, **characterized in that** cap-like stiffening beads (19) are formed in the transition region between the leg plates (11, -12) and the contact end sections (15, 16).

3. Sheet metal nut according to Claim 1 or Claim 2, **characterized in that** elongated stiffening beads (6, 18) extending in the longitudinal direction are formed in the side plates (4, 5) and/or in the leg plates (11, 12).

4. Sheet metal nut according to any of Claims 1 to 3, **characterized in that** the securing part (10) has securing webs (20) which are formed on the leg plates (11, 12) and engage recesses (8, 9) formed in the side plates (4, 5)

5. Sheet metal nut according to any of Claims 1 to 4, **characterized in that** the contact end sections (15, 16) are oriented at an angle relative to the support edge sections (24, 25).

6. Sheet metal nut according to any of Claims 1 to 5, **characterized in that** a thread structure is introduced into the base plate (2).

7. Sheet metal nut according to Claim 6, **characterized in that** the end faces (26, 27) of the contact end sections (15, 16) are a distance apart which corresponds substantially to the effective diameter of the thread structure.

8. Sheet metal nut according to any of Claims 1 to 7, **characterized in that** the base plate (2) and the contact end sections (15, 16) have recesses (28, 29) which are opposite one another and are equipped to cooperate with a dismantling tool.

## Revendications

1. Ecrou pour vis Parker destiné à être monté dans une ouverture (23) ménagée dans un élément faisant office de support (22), comprenant un élément récepteur en forme de cage (1) destiné à être inséré dans l'ouverture (23) et à être mis en prise d'accouplement avec un élément de raccordement pour assembler un élément rapporté avec l'élément faisant office de support (22), dans lequel l'élément récepteur en forme de cage (1) se compose d'une platine de base (2), de portions latérales d'assise (24, 25) qui viennent en contact d'application contre les portions de rive de l'ouverture (23) et de plaques latérales (4, 5) se faisant respectivement face, et comprenant des segments d'extrémité d'appui (15, 16) respectivement opposés aux portions latérales d'assise (24, 25) qui, lorsque l'écrou pour vis Parker est inséré en position, viennent cramponner par derrière les portions de rive de l'ouverture (23), les portions latérales d'assise (24, 25) étant en l'occurrence réalisées solidaires par formage de la platine de base (2) et deux plaques formant pattes (11, 12) diamétralement opposées étant prévues, pattes qui sont disposées entre les plaques latérales (4, 5) et qui, depuis une portion de pied (13), orientée à l'opposé des segments d'extrémité d'appui (15, 16), vont en s'écartant de plus en plus l'une de l'autre dans la direction des portions latérales d'assise (24, 25), et dans lequel les segments d'extrémité d'appui (15, 16) sont respectivement réalisés solidaires par formage d'une extrémité libre, orientée vers les portions latérales d'assise (24, 25), d'une plaque formant patte (11, 12) et sont également orientés l'un vers l'autre au niveau de leurs faces antérieures et sont, au niveau de leurs côtés plats, disposés opposés aux portions latérales d'assise (24, 25), **caractérisé en ce qu'**il est prévu un élément d'immobilisation en position (10) séparé, qui est relié aux plaques latérales (4, 5) faisant partie de l'élément récepteur en forme de cage (1) et qui comporte les plaques formant pattes (11, 12) et **en ce que** les pattes formant plaques (11, 12) sont raccordée ensemble au niveau de la portion de pied (13) par l'intermédiaire d'une barrette entretoise médiane (14).

2. Ecrou pour vis Parker selon la revendication 1, **caractérisé en ce qu'**il est prévu des moulurages de renforcement en forme de calotte sphérique (19) dans la zone de transition entre les plaques formant pattes (11, 12) et les segments d'extrémité d'appui (15, 16).

3. Ecrou pour vis Parker selon la revendication 1 ou la revendication 2, **caractérisé en ce qu'**il est prévu dans les plaques latérales (4, 5) et, ou encore, dans les plaques formant pattes (11, 12), des moulurages de renforcement oblongs (6, 18) s'étendant dans le sens longitudinal.

4. Ecrou pour vis Parker selon l'une des revendications 1 à 3, **caractérisé en ce que** l'élément d'immobilisation en position comporte des barrettes d'immobilisation en position (20) réalisées solidaires par formage des plaques formant pattes (11, 12), qui viennent en prise d'encastrement dans des évidements ménagés dans les plaques latérales (4, 5).

5. Ecrou pour vis Parker selon l'une des revendications 1 à 4, **caractérisé en ce que** les segments d'extrémité d'appui (15, 16) ont une orientation angulaire par rapport aux portions latérales d'assise (24, 25)

6. Ecrou pour vis Parker selon l'une des revendications 1 à 5, **caractérisé en ce que** la platine de base (2) comporte une structure formant filetage

7. Ecrou pour vis Parker selon la revendication 6, **caractérisé en ce que** les faces antérieures (26, 27) des segments d'extrémité d'appui (15, 16) sont respectivement écartés l'une de l'autre dans une proportion qui correspond sensiblement au diamètre réel de la structure formant filetage.

8. Ecrou pour vis Parker selon l'une des revendications 1 à 7, **caractérisé en ce que** la platine de base (2) et les segments d'extrémité d'appui (15, 16) sont pourvus d'évidements (28, 29) à disposition diamétralement opposée, qui sont destinés à assurer une interaction d'encastrement avec un outil de démontage.
